## Europäisches Patentamt

## European Patent Office

## Office européen des brevets

(11) Publication number: **0 242 809**
**B1**

(12) **EUROPEAN PATENT SPECIFICATION**

(45) Date of publication of patent specification: **08.08.90**

(51) Int. Cl.⁵: **E 01 C 19/32, B 60 L 3/02**

(21) Application number: **87105680.0**

(22) Date of filing: **16.04.87**

(54) **Device for self-propelled hand-operated vibrating plate and process for using said device.**

(30) Priority: **23.04.86 SE 8601855**

(43) Date of publication of application:
**28.10.87 Bulletin 87/44**

(45) Publication of the grant of the patent:
**08.08.90 Bulletin 90/32**

(84) Designated Contracting States:
**DE ES FR GB IT**

(56) References cited:
**DE-A-3 020 305**
**SE-B- 380 569**
**SE-B- 436 010**
**SE-B- 442 219**
**US-A-2 888 863**
**US-A-2 979 996**
**US-A-3 386 353**

(73) Proprietor: **Dynapac Light Equipment AB**
**Gängesvägen 4 Box 316**
**S-341 26 Ljungby (SE)**

(72) Inventor: **Grane, Gunnar**
**Per Hasselbergs väg 6**
**S-37163 Lyckeby (SE)**
Inventor: **Persson, Gert**
**Sunevägen 4**
**S-37160 Lyckeby (SE)**

Courier Press, Leamington Spa, England.

## Description

The present invention relates to self-propelled vibrating plate compactors that are operated by means of a handle extending from the plate compactor, the handle being fitted with a dead-man's handle to stop the plate compactor drive if the operator's grip on the control handle should be lost.

It is previously known that self-propelled machines of various kinds are equipped with safety devices of dead-man's handle type, but in the case of vibrating plate compactors this is less common. However, since heavy plate compactors in particular have a propulsion system of considerable power and are often used in confined spaces or where fixed obstacles may exist, fitting them with safety devices of the aforementioned type, which work regardless of whether the movement of the compactor is in a forward or rearward direction, is highly desirable with a view to preventing accidents and other kinds of injury or damage.

The present invention relates to a self-propelled, hand-controlled vibrating plate compactor equipped with an extended operating handle for manoeuvering it. The operating handle is fitted with a dead-man's handle which is held in the raised position by the operator when the compactor is in use. Propulsion of the vibrating plate compactor in the present case is accomplished by two or more contra-rotating eccentric elements which generate a force resultant the direction of which is variable. The eccentric elements are driven by an internal combustion engine via a centrifugal clutch. The centrifugal clutch is so designed as to engage and drive the eccentric elements at a speed that exceeds the idling speed of the internal combustion engine. The dead-man's handle according to the invention is connected to the throttle of the internal combustion engine (if a petrol engine) or its fuel supply (if a diesel engine) in such a manner that in the non-actuated or neutral position the engine runs at idling speed and in the positively actuated position (raised) the engine runs at working speed. In the negatively actuated position (pressed down past the neutral position) the engine ignition system is short-circuited (if a petrol engine) or the fuel supply is cut off altogether (if a diesel engine) with the result that the internal combustion engine stops.

As a rule, vibrating plate compactors have only three engine rpm settings that are of interest in this connection, namely stop, idling and working speed. Through the invention these engine rpm settings can be achieved with only one control, namely the dead-man's handle. In consequence, no separate control for regulating the speed of the internal combustion engine nor any separate stop control are needed. Further, it is an advantage for the compactor drive to be stopped by merely reducing engine revolutions to idling speed instead of stopping the engine altogether, since the compactor can then immediately be driven in the opposite direction, for example, without the need to go through the time-consuming procedure of starting the internal combustion engine again.

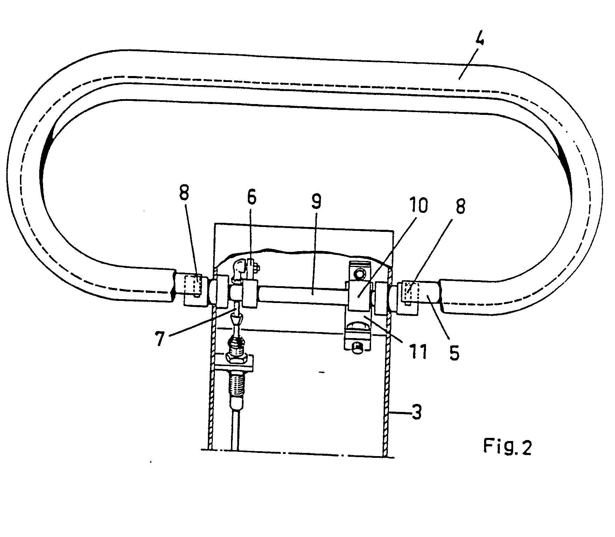

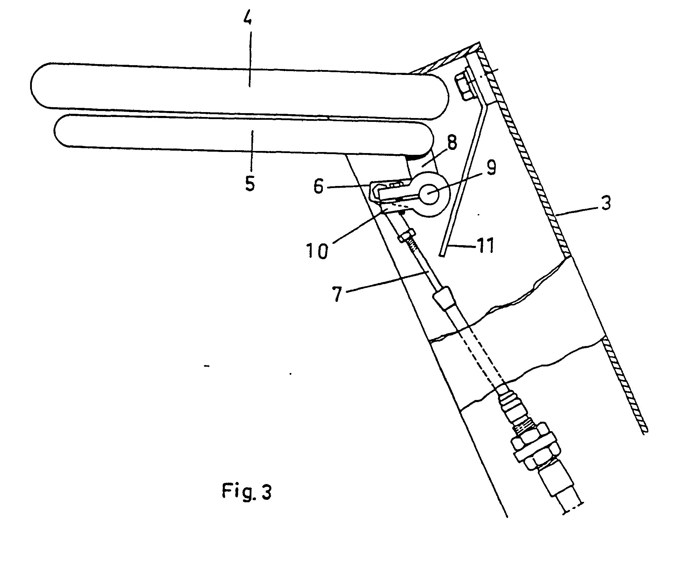

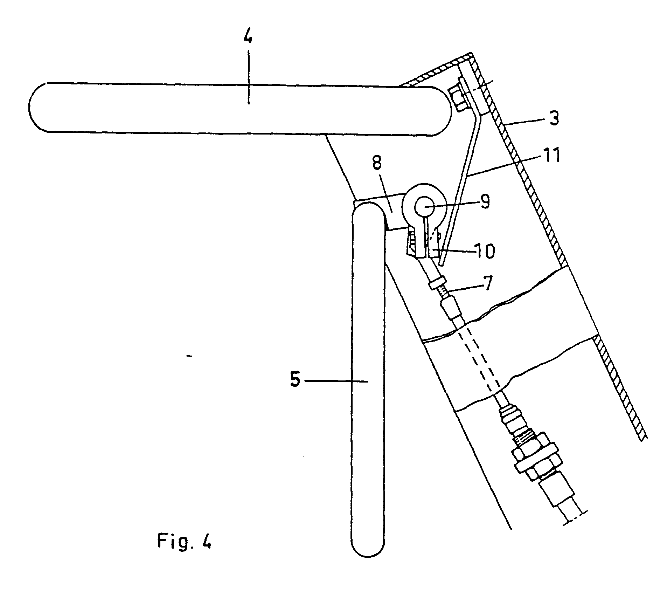

In the following, the invention will be described in greater detail with reference to a version of it shown in an appended drawing, where Fig. 1 shows a side view of a vibrating plate compactor equipped with a dead-man's handle and Fig. 2 the upper part of the operating bar with its operating handle and dead-man's handle. Figs. 3 and 4 show a vertical cross-section through the upper parts of the operating bar with the dead-man's handle in the non-actuated (neutral) and actuated positions respectively.

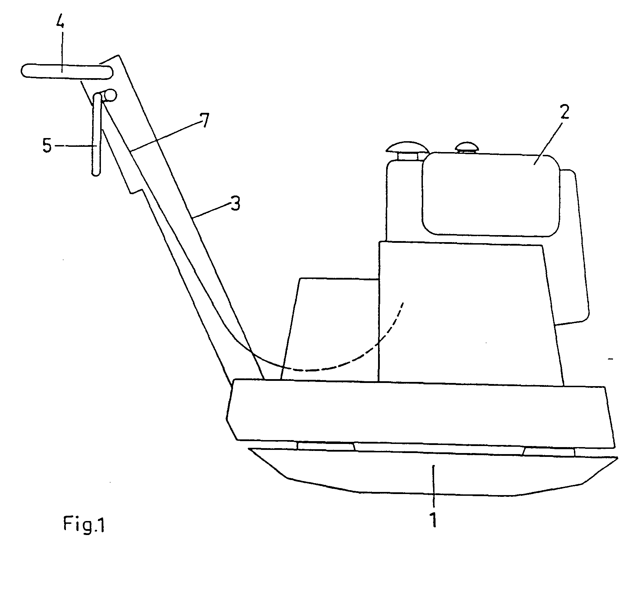

In Fig. 1, 1 designates the bottom plate of the vibrating plate compactor and 2 an internal combustion engine for driving the vibrating elements of the compactor. The vibrating plate compactor is manoeuvred by means of an operating bar 3 mounted on it which at its upper free end is equipped with an operating handle 4 and a dead-man's handle 5.

The eccentric elements, not shown, driven by the internal combustion engine consist of two or more contra-rotating eccentric elements which impart to the compactor a vibrational motion and a translatory forward or rearward motion, depending on the direction of the vibrational force resultant generated by the rotation of the eccentric elements.

In the example depicted, the dead-man's handle or safety handle is in the form of a pivoted yoke 5 mounted on the operating bar 3 and having mainly the same shape and length as operating handle 4 except that yoke 5 extends in a direction parallel to the operating handle by a somewhat smaller amount than the latter in order to make it easier for the operator to grasp dead-man's handle 4 and yoke 5 simultaneously.

According to the invention the eccentric elements are driven by the internal combustion engine 2 via a centrifugal clutch which is designed not to engage until the speed of the engine exceeds its idling speed.

Setting the stop position of the internal combustion engine, as well as its working and idling speeds, is accomplished according to the invention by means of the pivoted dead-man's handle on the operating handle, whereby the engine runs at its idling speed when the dead-man's handle is in the neutral position.

Rigidly mounted on the end of yoke 5 facing the operating bar and at an angle to its plane are two levers 8 which are rigidly mounted on a shaft 9 pivoted in operating bar 3. Also rigidly mounted on shaft 9 is a coupling arm 6 which is connected to the fuel control 7 of the internal combustion engine. When yoke 5 swings in relation to operating handle 4, shaft 9 also swings and consequently also arm 6 with the result that combustion control 7 is displaced to a corresponding degree.

When yoke 5 is raised towards operating handle 4, combustion control 7 is so set that the engine runs at its working speed. From this position yoke 5 can swing freely down by its own weight to a position which gives a setting of the combustion control that corresponds to the idling speed of the engine.

Rigidly mounted on shaft 9 is a cam 10 which in the aforementioned position of yoke 5 is designed to abut against a spring-loaded stop 11. In the example shown, the cam is in the shape of a staple, whereby the eccentricity of cam 10 relative to shaft 9 can be adjusted so that the desired engine idling speed will be obtained when the cam comes to abut against stop 11.

Further swinging of yoke 5 against the force of spring-loaded stop 11 causes further throttling of the fuel supply to the engine so that it stops. This is a suitable arrangement for diesel engines. If the engine is petrol-driven a more suitable arrangement is to fit an electric switch in the ignition circuit of the petrol engine which stop 11 will strike when yoke 5 is moved towards the stop position.

When the vibrating plate compactor is to be used the internal combustion engine is started in the customary manner. Through its own weight dead-man's handle 5 will be in the idling speed position and before the eccentric elements can begin to work it must be swung up towards operating handle 4. The operator grasps the operating handle and the dead-man's handle simultaneously and the compactor begins to vibrate at the same time as it moves forwards or rearwards, depending on the setting of the eccentrics in relation to each other. As soon as the operator releases the operating handle and consequently also the dead-man's handle, the weight of the latter will cause it to swing down to a position corresponding to the idling speed of the engine and the compactor will stop as the centrifugal clutch will then disengage and no power will be transmitted between the engine and the eccentric elements.

## Claims

1. Process for self-propelled vibrating plate compactors equipped with a dead man's handle which is held in the raised position by the operator when the engine runs at working speed and the compactor is in use, and which swings back in its neutral position by its own weight for stopping the forward or rearward motion of the compactor as soon as the handle is released by the operator, the vibration-generating translatory motion of the compactors being imparted by meas of contra-rotating eccentric elements for generating directional vibrational forces, whereby the eccentric elements are driven by an internal combustion engine via a centrifugal clutch which does not engage until engine revolutions exceed idling speed, characterized in that the setting of the stop position of the internal combustion engine, as well as its working and idling speeds, is accomplished by means of a single control, namely by said dead man's handle arranged on the operating handle of the vibrating plate compactor and connected to the fuel control of the engine, whereby the handle is freely swinging by its own weight from its positively actuated raised position to its non-actuated neutral position and is pressed down passed the neutral position in its negatively actuated position with the result that the internal combustion engine stops.

2. A device for implementing the process as in Claim 1, namely a self propelled vibrating plate compactor equipped with a dead man's handle which is held in the raised position by the operator when the engine runs at working speed and the compactor is in use, and which swings back in its neutral position by its own weight for stopping the forward or rearward motion of the compactor as soon as the handle is released by the operator, the vibration-generating translatory motion of the compactor being imparted by means of contra-rotating eccentric elements for generating directional vibrational forces, whereby the eccentric elements are driven by an internal combustion engine via a centrifugal clutch which does not engage until engine revolutions exceed idling speed, characterized in that

the dead man's handle (5) is rigidly mounted on a pivoted shaft (9) in the operating bar (3) of the vibrating plate compactor, in that the dead-man's handle is connected to the fuel control (7) of the internal combustion engine via a coupling arm (6) rigidly mounted on the shaft (9),

in that the shaft (9) is equipped with a cam (10) which is rigidly mounted on the shaft (9) and eccentrically arranged relative to it,

in that the cam (10) is arranged to abut against a spring-loaded stop (11) mounted by the operating bar (3) of the vibrating plate compactor when the dead-man's handle is in neutral position, and

in that the dead-man's handle (5) is free to swing from a raised position against the operating handle (4) of the vibrating plate compactor, in which position the engine runs at its working speed, down to a position where the cam (10) abuts against the stop (11), in which position the engine runs at its idling speed, and further from this position against the spring force of the stop (11) to a stop position where the engine stops.

3. A device as in Claim 2, characterized in that the dead man's handle (5) is designed so as to coincide with the shape of the operating handle (4) and to extend in a direction of the operating bar (3) by a slightly less amount than the operating handle extends in the same direction, so as to make it easier for the operator to grasp the operating handle (4) and the dead man's handle (5) simultaneously.

4. A device as in Claim 2, characterized in that the cam (10) is designed in the shape of a fork and is lockable in different positions relative to the shaft (9).

## Patentansprüche

1. Verfahren zum Anhalten von selbstangetriebenen Rüttelplattenverdichtern mit einer Sicherheitseinrichtung, die während des Laufs der Maschine durch die Bedienungsperson hochgehalten wird und beim Loslassen durch ihr Eigengewicht herunterschwingt, um die Vorwärts- oder Rückwärtsbewegung des Verdichters sofort zu stoppen, wobei die vibrationserzeugende fortschreitende Bewegung der Verdichter durch gegenläufige Exzenterelemente zur Erzeugung gerichteter Vibrationskräfte verursacht wird und die Exzenterelemente von einer Verbrennungsmaschine mittels einer Zentrifugalkupplung angetrieben werden, die nicht eingreift, bevor die Motorumdrehungen die Leerlaufdrehzahl überschreiten, dadurch gekennzeichnet, daß das Abstellen und das Einstellen der Arbeits- und Leerlaufdrehzahl der Verbrennungsmaschine mittels eines einfachen Steuerorgans erfolgt, nämlich durch besagte Sicherheitseinrichtung, die auf dem Führungsgriff des Rüttelplattenverdichters angeordnet und mit der Brennstoffzufuhr des Motors verbunden ist, wobei der Führungsgriff durch sein Eigengewicht frei von einer positiv betätigten angehobenen Stellung in eine nicht betätigte neutrale Stellung schwingen kann und über die neutrale Stellung hinaus in eine negativ betätigte Stellung gedrückt werden kann, mit dem Ergebnis, daß die Maschine anhält.

2. Vorrichtung zur Durchführung des Verfahrens nach Anspruch 1, nämlich ein selbstangetriebener Rüttelplattenverdichter mit einer Sicherheitseinrichtung, die während des Laufs der Maschine durch die Bedienungsperson hochgehalten wird und beim Loslassen durch ihr Eigengewicht herunterschwingt, um die Vorwärts- oder Rückwärtsbewegung des Verdichters sofort zu stoppen, wobei die vibrationserzeugende fortschreitende Bewegung der Verdichter durch gegenläufige Exzenterelemente zur Erzeugung gerichteter Vibrationskräfte verursacht wird und die Exzenterelemente von einer Verbrennungsmaschine mittels einer Zentrifugalkupplung angetrieben werden, die nicht eingreift, bevor die Motorumdrehungen die Leerlaufdrehzahl überschreiten, dadurch gekennzeichnet, daß

die Sicherheitseinrichtung (5) fest auf einer drehbaren Welle (9) in der Führungsstange (3) des Rüttelplattenverdichters angeordnet ist,

daß die Sicherheitseinrichtung mit der Brennstoffzufuhr (7) des Verbrennungsmotors über einen Kupplungsarm (6) verbunden ist, der fest auf der Welle (9) angeordnet ist,

daß die Welle (9) mit einer Nase (10) versehen ist, die fest auf der Welle (9) und relativ zu ihr exzentrisch angeordnet ist, daß die Nase (10) so angeordnet ist, daß sie gegen einen unter Federspannung stehenden Anschlag (11) der Führungsstange (3) des Rüttelplattenverdichters anstößt, wenn sich die sicherheitsvorrichtung in neutraler Stellung befindet, und

daß die Sicherheitseinrichtung (5) frei von einer angehobenen Stellung gegenüber des Führungsgriffes (4) des Rüttelplattenverdichters, in der der Motor mit Arbeitsdrehzahl läuft, hinunter in eine Stellung schwingen kann, in der die Nase (10) gegen den Anschlag (11) stößt und in der der Motor in seiner Leerlaufdrehzahl läuft, und weiter von dieser Stellung gegen die Federkraft des Anschlages (11) in einer Haltestellung, in der der Motor anhält.

3. Vorrichtung nach Anspruch 2, dadurch gekennzeichnet, daß die Sicherheitseinrichtung (5) so ausgebildet ist, daß sie mit der Form des Führungsgriffes (4) übereinstimmt und im Abstand von der Führungstange (3) in gleicher Richtung wie der Führungsgriff mit geringem Versatz verläuft, um es dem Bedienungspersonal zu erleichtern, den Führungsgriff (4) und die Sicherheitseinrichtung (5) gleichzeitig zu ergreifen.

4. Vorrichtung nach Anspruch 2, dadurch gekennzeichnet, daß die Nase (10) gabelförmig ausgebildet ist und in verschiedenen Stellungen relativ zur Welle (9) feststellbar ist.

**Revendications**

1. Procédé pour l'utilisation de machines à compacter autopropulsées à plaque vibrante équipées d'un levier de sûreté qui est maintenu en position haute par l'opérateur lorsque le moteur tourne à la vitesse de régime et que la machine à compacter est en service, et qui revient en basculant dans sa position neutre par son propre poids pour arrêter le mouvement vers l'avant ou vers l'arrière de la machine à compacter dès que le levier est libéré par l'opérateur, le mouvement de translation générateur de vibrations des machines à compacter étant imprimé au moyen d'éléments excentrés à rotation inverse pour générer des forces vibratoires directionnelles, de sorte que les éléments excentrés sont entraînés par un moteur à combustion interne par l'intermédiaire d'un embrayage centrifuge qui n'embraye pas jusqu'à ce que la vitesse de rotation du moteur dépasse la vitesse de ralenti, caractérisé en ce que le réglage de la position d'arrêt du moteur à combustion interne, aussi bien que ses vitesses de régime et de ralenti, est obtenu au moyen d'une seule commande, à savoir à l'aide dudit levier de sûreté disposé sur le levier de commande de la machine à compacter à plaque vibrante et relié à la commande d'arrivée de combustible du moteur, de sorte que le levier est libre de basculer par son propre poids depuis sa position haute positivement actionnée jusqu'à sa position neutre non actionnée et est pressé vers le bas après avoir dépassé la position neutre dans sa position négativement actionnée avec le résultat que le moteur à combustion interne s'arrête.

2. Un dispositif pour la mise en oeuvre du procédé selon la revendication 1, à savoir une machine à compacter autopropulsée à plaque vibrante équipée d'un levier de sûreté qui est maintenu en position haute par l'opérateur lorsque le moteur tourne à la vitesse de régime et que la machine à compacter est en service, et qui revient en basculant dans sa position neutre par son propre poids pour arrêter le mouvement vers l'avant ou vers l'arrière de la machine à compacter dès que le levier est libéré par l'opérateur, le mouvement de translation générateur de vibrations de la machine à compacter étant imprimé au moyen d'éléments excentrés à rotation inverse pour générer des forces vibratoires directionnelles, de sorte que les éléments excentrés sont entraînés par un moteur à combustion interne par l'intermédiaire d'un embrayage centrifuge qui n'embraye pas jusqu'à ce que la vitesse de rotation du moteur dépasse la vitesse de ralenti, caractérisé en ce que

le levier de sûreté (5) est monté rigidement sur un arbre (9) monté pivotant dans la barre de commande (3) de la machine à compacter à plaque vibrante, en ce que le levier de sûreté est relié à la commande (7) d'arrivée du carburant du moteur à combustion interne par l'intermédiaire d'un bras de liaison (6) monté rigidement sur l'arbre (9),

en ce que l'arbre (9) est muni d'une came (10) qui est rigidement montée sur l'arbre (9) et disposée excentriquement par rapport à lui, en ce que la came (10) est prévue pour venir en butée contre un arrêtoir à ressort (11) monté près de la barre de commande (3) de la machine à compacter à plaque vibrante lorsque le levier de sûreté est en position neutre, et

en ce que levier de sûreté (5) est libre de pivoter d'une position haute contre le levier de commande (4) de la machine à compacter à plaque vibrante, position dans laquelle le moteur tourne à sa vitesse de régime, jusqu'à une position basse dans laquelle la came (10) vient en butée contre l'arrêtoir (11), position dans laquelle le moteur tourne à sa vitesse de ralenti, et ensuite depuis cette position, contre la force du ressort de l'arrêtoir (11), jusqu'à une position d'arrêt dans laquelle le moteur s'arrête.

3. Un dispositif selon la revendication 2, caractérisé en ce que le levier de sûreté (5) est conçu de manière à coïncider avec la forme du levier de commande (4) et à s'étendre en direction de la barre de contrôle (3) d'une valeur légèrement inférieure à celle dont le levier de commande s'étend dans la même direction, afin de rendre plus facile pour l'opérateur la saisie simultanément du levier de commande (4) et du levier de sûreté (5).

4. Un dispositif selon la revendication 2, caractérisé en ce que la came (10) est conçue sous la forme d'une fourche et peut être bloquée dans différentes positions par rapport à l'arbre (9).

Fig.1

Fig. 2

Fig. 3

Fig. 4